# EUROPEAN PATENT SPECIFICATION

(11) **EP 4 283 337 B1**
(45) Date of publication and mention of the grant of the patent: **06.05.2026**
(21) Application number: 21920306.4
(22) Date of filing: 22.01.2021
(51) Int. Cl.: G01M 17/007, B60G 17/019, G01M 17/04, B60L 50/60, H01M 50/579, B60W 50/02, B60W 50/14

(54) **AUTOMOBILE CHASSIS SCRAPING CONTROL METHOD, APPARATUS, AND COMPUTER STORAGE MEDIUM**
VERFAHREN, VORRICHTUNG UND COMPUTERSPEICHERMEDIUM ZUR STEUERUNG DES ABKRATZENS EINES KRAFTFAHRZEUGCHASSIS
PROCÉDÉ DE COMMANDE DE RACLAGE DE CHÂSSIS D'AUTOMOBILE, APPAREIL ET SUPPORT DE STOCKAGE INFORMATIQUE

(43) Date of publication of application: 29.11.2023
(73) Proprietor: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: TONG, Yang, Ningbo, Zhejiang 315336 (CN)
(74) Representative: Murgitroyd & Company
(86) International application number: PCT/CN2021/073352
(87) International publication number: WO 2022/155908

(56) References cited:
- CN-A- 106 546 990
- CN-U- 205 326 709
- CN-U- 207 000 070
- DE-A1- 102013 001 325
- DE-A1- 102017 211 047
- DE-A1- 102018 130 881
- DE-A1- 102019 207 435
- JP-A- 2004 177 413
- US-A- 4 180 795
- US-A1- 2020 161 717

## Description

### Technical Field

The present application relates to the technical field of vehicle bottoming safety, and particularly relates to a method and a device for controlling vehicle chassis bottoming, and a computer storage medium.

### Background Art

It is very easy for the vehicle chassis to have bottoming when the vehicle runs on uneven road sections, which may cause great damage to the chassis, leaving great safety risks. For example, when the vehicle has bottoming, there may be obvious deformation of the battery pack shell, or the bottom shell of the battery pack invades the inside of the battery pack, or the battery cell and other components are deformed, or the whole module remains intact, but the battery cell is slightly deformed, etc. These situations are all potential factors for battery-related accidents, which may lead to the occurrence of vehicle fire and deflagration in a serious case.

However, at present, there is no warning prompt for the vehicle after the vehicle has bottoming, and there is a great risk if the user continues to use the vehicle.

The published US patent application US2020/161717A1 relates to a safety apparatus for a battery. The published German patent application DE102013001325A1 relates to a method for operating a vehicle component of a vehicle by means of a control device as a function of a safety state of the vehicle that can be evaluated at predeterminable times. The published German patent application DE102018130881A1 relates to a traction battery of a motor vehicle and a motor vehicle.

### Summary of the Invention

The technical problem to be solved by the present application is that the monitoring and pre-warning of a bottoming event cannot be achieved and the driving risk is high in the prior art.

In order to solve the problem existing in the prior art, the present application provides a method and a device for controlling vehicle chassis bottoming, and a computer storage medium.

According to an aspect of the present application, a method for controlling vehicle chassis bottoming according to claim 1 is provided. In a possible implementation, the method for controlling vehicle chassis bottoming includes: receiving a pressure signal;
generating a target waveform according to the pressure signal;
acquiring calibration information;
extracting a preset number of target key points from the target waveform based on the calibration information; and
determining that the vehicle chassis bottoming occurs to trigger alarm processing when a corresponding value of the target key point in the target waveform matches with the calibration information.

In an implementable solution, when the pressure signal comprises a plurality of pressure signals, the generating a target waveform according to the pressure signal comprises:
generating a plurality of initial waveforms corresponding to the plurality of pressure signals;
fitting the plurality of initial waveforms to generate a fitted waveform; and
taking the fitted waveform as the target waveform.

In an implementable solution, the calibration information includes calibration key points, and the extracting a preset number of target key points from the target waveform based on the calibration information comprises:
extracting a preset number of target key points from the target waveform based on the calibration key points.

According to the claimed invention, the calibration information comprises region calibration information; the region calibration information comprises a plurality of calibration region waveforms and region calibration key points corresponding to the plurality of calibration region waveforms; and the extracting a preset number of target key points from the target waveform based on the calibration information comprises:
acquiring region division information about the plurality of calibration region waveforms;
performing region division on the target waveform according to the region division information to obtain a plurality of target region waveforms corresponding to the plurality of calibration region waveforms; and
extracting region target key points from the plurality of target region waveforms as the preset number of target key points based on the region calibration key points.

According to the claimed invention, before the step of determining that the vehicle chassis bottoming occurs when a corresponding value of the target key point in the target waveform matches with the calibration information, the method further comprises:
acquiring a matching region waveform matching with the calibration region waveform in the plurality of target region waveforms;
determining the number of matching regions of the matching region waveform;
determining that the corresponding value of the target key point in the target waveform matches with the calibration information when the number of matching regions is greater than a first preset threshold; and
determining that the vehicle chassis bottoming occurs when the corresponding value of the target key point in the target waveform matches with the calibration information.

In an implementable solution, the acquiring a matching region waveform matching with the calibration region waveform in the plurality of target region waveforms comprises:
acquiring the number of matching region target key points in each target region waveform with the region calibration key points in the corresponding calibration region waveform; and
taking the target region waveform of which the number of values of the region target key points in the target region waveform matching with the values of the corresponding region calibration key points in the calibration region waveform is greater than a second preset threshold as a matching region waveform.

According to the claimed invention, after determining the number of matching regions of the matching region waveform, the method further comprises:
acquiring region sequence number information about the matching region waveform;
sorting the sequence number information;
determining a difference value between adjacent sequence number information based on the sorting to obtain a difference value set; and
determining that the vehicle chassis bottoming occurs to trigger alarm processing when the difference values in the difference value set are all less than a third preset threshold.

In an implementable solution, the determining that the vehicle chassis bottoming occurs when the corresponding value of the target key point in the target waveform matches with the calibration information comprises:
determining that bottoming of the automobile chassis occurs when the corresponding absolute value of the target key point in the target waveform matches with a corresponding absolute value of the calibration key point in the calibration waveform.

According another aspect of the present application, a device for controlling vehicle chassis bottoming according to claim 6 is provided.

According to another aspect of the present application, a computer-readable storage medium according to claim 7 is provided. The storage medium has stored therein at least one instruction, at least one piece of program, a set of codes, or a set of instructions, which are loaded and executed by a processor to implement the claimed method for controlling vehicle chassis bottoming.

### Brief Description of the Drawings

In order to more clearly illustrate the technical solutions in the embodiments of the present application, the drawings to be used in the description of the embodiments will be briefly introduced below. Obviously, the drawings in the description below are only some embodiments of the present application. It will be apparent to those skilled in the art to obtain other drawings according to these drawings without involving any inventive effort.
Fig. 1 is a flow chart of a method for controlling vehicle chassis bottoming described in the present application;
Fig. 2 is a flow chart of a method for extracting a object key point according to an embodiment of the present application;
Fig. 3 is a flow chart of a method for determining vehicle chassis bottoming according to an embodiment of the present application;
Fig. 4 is a flow chart of a method for determining vehicle chassis bottoming according to another embodiment of the present application;
Fig. 5 is a structural block diagram showing a structure of a device for controlling vehicle chassis bottoming according to an embodiment of the present application.

### Detailed Description of the Invention

In order that those skilled in the art may better understand the present application, the technical solutions in the embodiments of the application will be described clearly and completely in conjunction with the accompanying drawings in the embodiments of the application. Obviously, the described embodiments are only part of the embodiments of the application, rather than all of the embodiments.

Reference herein to "an example" or "example" means that a particular feature, structure, or characteristic may be included in at least one implementation of the application. In describing the present application, it should be understood that the terms "first", "second", "third", "fourth", and the like in the description and in the claims hereof, as well as in the appended drawings, are used for distinguishing different objects and not necessarily for describing a particular sequence. Furthermore, the terms "comprises" and "having", as well as any variations thereof, are intended to cover a non-exclusive inclusion. For example, a process, a method, a system, a product, or an apparatus that comprises a list of steps or elements are not limited to the listed steps or elements but may optionally include other steps or elements not listed or inherent to such process, method, product, or apparatus.

In order to solve the problem existing in the prior art, the present application provides a method and a device for controlling vehicle chassis bottoming, and a computer storage medium.

According to an aspect of the present application, a method for controlling vehicle chassis bottoming is provided. The method is used to monitor the status of the chassis. In particular, monitoring equipment may be provided on the chassis to be monitored. The monitoring equipment includes signal monitoring equipment and a controller. The signal monitoring equipment is used for monitoring a crash pressure of the chassis and transmitting a monitored pressure signal to a controller. The controller is used for receiving the pressure signal transmitted by the signal monitoring equipment. The signal monitoring equipment may be one or more. When the signal monitoring equipment are more, the signal monitoring equipment may be arranged around the chassis or the protective plate. Preferably, the signal monitoring equipment may be a sensor, a signal detector or other equipment capable of monitoring a signal, and after obtaining the pressure signal, transmits the obtained pressure signal to the controller.

Further, a protective plate may also be provided so that the protective plate may be provided on the chassis. The protective plate may cover the whole chassis region or may only cover the weak region of the chassis. Herein, the weak region of the chassis may refer to a location where the battery is placed. The shape of the protection plate may be the same as the shape of the bottom plate, or may be the same as the shape of the weak region of the bottom plate, or may be other easily formed shapes, such as a rectangular shape, a circular shape, an elliptical shape, a triangular shape, etc. The specific shape of the protection plate may be determined according to practical requirements, and the specific shape of the protection plate is not limited herein. A piezoelectric sensor may be disposed around the protective plate.

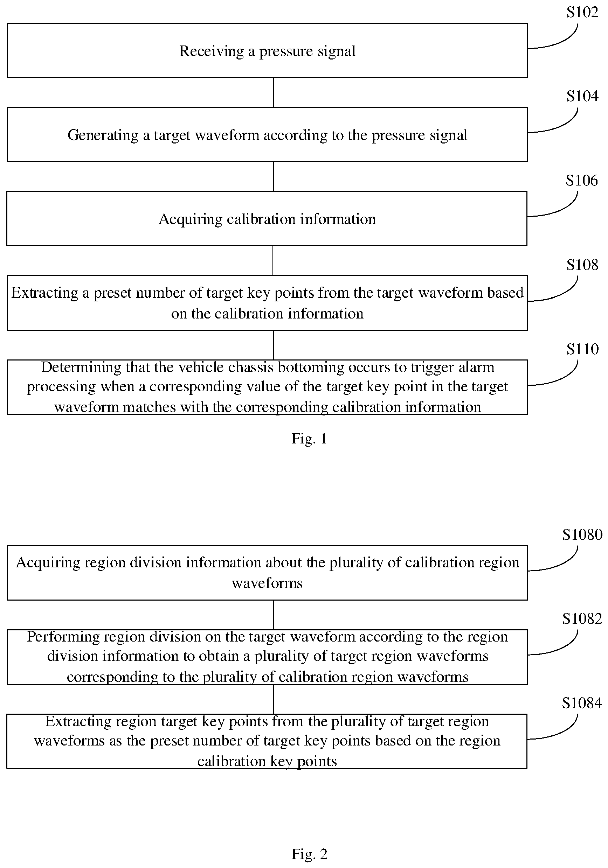

In a possible implementation, the method for controlling vehicle chassis bottoming is implemented based on the monitoring equipment described above, and as shown in Fig. 1. The method includes:
S102, receiving a pressure signal.

Specifically, when applied in the environment of a vehicle chassis, a pressure signal can be obtained by a piezoelectric sensor monitoring the state of the chassis in real time. Specifically, after the pressure signal is monitored, the pressure signal is transmitted to a controller, and the controller receives the pressure signal sent by the piezoelectric sensor. Specifically, the pressure sensor is provided at an edge of the chassis or an edge of the protection plate provided on the chassis.

S104, generating a target waveform according to the pressure signal.

Specifically, in an implementable solution, when the pressure signal is one pressure signal, the step S104 may specifically be that
the controller generates a target waveform according to the received pressure signal.

Further, in other implementable solutions, when the pressure signal includes a plurality of pressure signals, the step S104 may specifically include
generating a plurality of initial waveforms corresponding to the plurality of pressure signals.

Specifically, the controller generates a plurality of initial waveforms according to the received plurality of pressure signals, each corresponding to one initial waveform.

The plurality of initial waveforms are fitted to generate a fitted waveform.

Specifically, the controller may be provided with a waveform fitting device for performing waveform fitting, which is prior art and will not be described in detail herein.

The fitted waveform is taken as the target waveform.

S106, acquiring calibration information.

Specifically, in an implementable solution, the calibration information may include calibration key points that characterize the location information of the key points on the calibration waveform.

In another implementable solution, the calibration information may include a calibration region waveform and region calibration key points corresponding to the calibration region waveform. The calibration region waveform is used for characterizing waveform information in a region performed with region division on the calibration waveform. The region calibration key points are used for characterizing position information about the key points in the calibration region waveform.

Specifically, before the method for controlling vehicle chassis bottoming is executed, the vehicle chassis may be calibrated as a basis for judging the chassis bottoming condition when the method for controlling vehicle chassis bottoming is executed. The calibrated information is stored in the controller.

S108, extracting a preset number of target key points from the target waveform based on the calibration information.

In an implementable solution, the extracting a preset number of target key points in the target waveform based on the calibration information when the calibration information includes a calibration key point can be obtained by:
extracting a preset number of target key points from the target waveform based on the calibration key points.

Specifically, the calibration key point may be one calibration key point in a calibration waveform, for example, one point corresponding to a peak position in the calibration waveform, or one point corresponding to a valley position in the calibration waveform. When the number of calibration key points is one, the preset number corresponds to one. When the preset number is one, a point corresponding to the peak position in the target waveform can be extracted based on the calibration key point, or a point corresponding to the valley position in the target waveform can be extracted based on the calibration key point.

Further, in other implementable solutions, the calibration key points may be a plurality of calibration key points in the calibration waveform, such as points corresponding to positions in the calibration waveform that are separated by a predetermined distance. When there are a plurality of calibration key points, the preset number corresponds to a plurality. When the preset number is the plurality, a corresponding number of target key points in the target waveform can be extracted based on the calibration key points. The preset number may specifically be 3, 5 or 7, etc. and may specifically be set according to actual situations, and is not specifically defined herein.

In another implementable solution, the calibration information includes region calibration information. The region calibration information includes a plurality of calibration region waveforms and region calibration key points corresponding to the calibration region waveforms. The extracting a preset number of target key points from the target waveforms based on the calibration information can be obtained by the following steps as shown in Fig. 2:

S1080, acquiring region division information about the plurality of calibration region waveforms.

Preferably, the region division information about the region calibration waveform may be that the calibration waveform is divided into regions according to a preset interval time, may also be that the calibration waveform is divided into regions according to the peak position or may be divided in other divisible manners, which is not specifically defined herein.

Further, after the calibration waveform is divided into a plurality of calibration region waveforms, each calibration region waveform may be numbered to obtain a plurality of calibration region waveforms having sequence numbers. Preferably, the divided calibration region waveforms may be numbered in the region division sequence of the calibration waveforms. The specific numbering rule may be the sequence of 1, 2, 3, 4, 5, etc., may also be a sequence based on odd numbers, such as 1, 3, 5, 7, or a sequence based on even numbers, such as 2, 4, 6, 8. The specific numbering rule thereof can be set according to actual situations, and is not specifically defined herein.

S1082, performing region division on the target waveform according to the region division information to obtain a plurality of target region waveforms corresponding to the plurality of calibration region waveforms.

Specifically, the target waveform is divided according to the same region division manner as the division calibration waveform to obtain a plurality of target region waveforms. Furthermore, after the target waveform is divided into a plurality of target region waveforms, each target region waveform may be numbered, and the numbering rule thereof is the same as the numbering rule of the calibration region waveform. The sequence number of the target region waveform has a corresponding relationship with the sequence number of the calibration region waveform.

S1084, extracting region target key points from the plurality of target region waveforms as the preset number of target key points based on the region calibration key points.

Specifically, the region calibration key points are predetermined and stored in the controller. There is a corresponding relationship between the region calibration key points and the calibration regions, namely, each calibration region waveform corresponds to a region calibration key point. The number of region calibration key points in each calibration region waveform may be one or more. When the number of region calibration key points in each calibration region waveform is one, a point where the calibration region waveform is located at the middle position of the area may be taken as a region calibration key point.

Further, when there are a plurality of region calibration key points in each calibration region, a point at a preset position in the calibration region waveform may be extracted as an region calibration key point of the calibration region waveform of the region according to a preset extraction rule. For example, there may be three region calibration key points of the region where each calibration regional waveform is located. A point at the middle position of the region where the region calibration waveform is located and points 1/4 before and after the point located at the middle position may be extracted respectively may be respectively extracted. Alternatively, there may be two region calibration key points of the region where each calibration regional waveform is located. A point at the middle position of the region where the region calibration waveform is located and a point behind the point at the middle position and 1/4 away from the point at the middle position may be respectively extracted. It will be understood that 1/4 or other ratio as used herein refers to the ratio of the overall waveform of the calibration region.

Further, the extracting region target key points from the plurality of target region waveforms based on the region calibration key points in each calibration region waveform specifically includes extracting region target key points corresponding to the region calibration key points in the corresponding calibration region waveform from the target region waveform corresponding to the calibration region waveform. It can be understood that the region target key point corresponds to the region calibration key point, meaning that the extraction position of the region target key point in the target region waveform corresponds to the extraction position of the region calibration key point in the calibration region waveform corresponding to the target region waveform.

S110, determining that the vehicle chassis bottoming occurs to trigger alarm processing when a corresponding value of the target key point in the target waveform matches with the corresponding calibration information.

Specifically, when the calibration key information includes a calibration key point, if the absolute value of the corresponding value of the target key point of the target waveform in the target waveform is equal to the absolute value of the corresponding value of the calibration key point of the corresponding calibration waveform in the calibration waveform, it indicates that the target key point matches with the calibration information. At this moment, it is determined that the vehicle chassis bottoming occurs to trigger alarm processing.

It will be appreciated that, in an implementable solution, the triggering the warning process may be a triggering of warning voice, so that the driver can repair the car in time or take relevant measures based on the warning voice to improve driving safety during driving.

In another implementable solution, the triggering the alarm processing may also be a triggering of a text prompt. The alarm prompt is converted into text information to be displayed on the display screen of the driver cabin, so that the driver can timely repair the vehicle or take relevant measures according to the text prompt to improve the driving safety during driving. Specifically, when the text prompt information is displayed via the display screen, the alarm prompt information is transmitted via a wireless network.

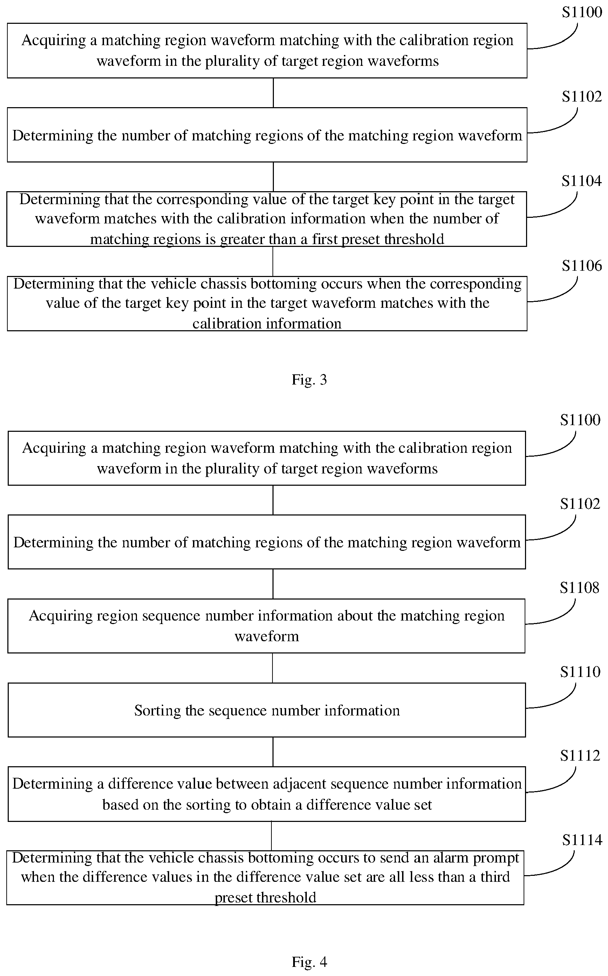

When the calibration information includes region calibration information, and the region calibration information includes a plurality of calibration region waveforms and a region calibration key point corresponding to the calibration region waveform, before the step of determining that the vehicle chassis bottoming occurs when the corresponding value of the target key point in the target waveform matches with the corresponding calibration information, the method may further include the following steps as shown in Fig. 3:

S1100, acquiring a matching region waveform matching with the calibration region waveform in the plurality of target region waveforms.

Specifically, the acquiring a matching region waveform matching with the calibration region waveform in the plurality of target region waveforms can be achieved on the basis of the following manner:
acquiring the number of matching region target key points in each target region waveform with the region calibration key points in the corresponding calibration region waveform, and taking the target region waveform of which the number of values of the region target key points in the target region waveform matching with the values of the corresponding region calibration key points in the calibration region waveform is greater than a second preset threshold as a matching region waveform.

Specifically, a difference value between any one target key point in each target region waveform and a corresponding calibration key point can be acquired first. When an absolute value of the difference value is less than a preset difference value, the target key point is considered to match with the corresponding calibration key point. By comparing the region target key points in the target region waveform one by one, the number of matching region target key points in the target region waveform with the region calibration key points in the corresponding calibration region waveform can be determined. It should be understood that the preset difference value may be set according to actual situations, and is not specifically limited herein.

After determining the number of matching region target key points in the target region waveform with the region calibration key points in the corresponding calibration region waveform, the obtained number may be compared with a second preset threshold. If the number of matching region calibration key points in the target region waveform with the region calibration key points in the corresponding calibration region waveform is greater than the second preset threshold, it is determined that the target region waveform matches with the corresponding calibration region waveform.

It should be understood that the second preset threshold value may be 2, 3 or other values. The second preset threshold value may be determined according to actual situations, and is not specifically limited herein.

S1102, determining the number of matching regions of the matching region waveform.

Specifically, after comparing all the target region waveforms in the plurality of target region waveforms, the number of matching region waveforms is determined. The determined number of matching region waveforms is taken as the number of matching regions.

S1104, determining that the corresponding value of the target key point in the target waveform matches with the calibration information when the number of matching regions is greater than a first preset threshold.

Specifically, after determining the number of matching regions of the target region waveform matching with the calibration region waveform, the number of matching regions can be compared with the first preset threshold. If the number of matching regions is greater than the first preset threshold, the corresponding value of the target key point in the target waveform matches with the calibration information. It should be understood that the first preset threshold value may be a value such as 3 or 4 or 5, or other values, may be determined according to actual situations, and is not specifically limited herein.

S1106, determining that the vehicle chassis bottoming occurs when the corresponding value of the target key point in the target waveform matches with the calibration information.

Further, in other implementations, after the determining the number of matching regions of the matching region waveform, as shown in Fig. 4, the method further includes:
S1108, acquiring region sequence number information about the matching region waveform;
S1110, sorting the sequence number information;
S1112, determining a difference value between adjacent sequence number information based on the sorting to obtain a difference value set;
S1114, determining that the vehicle chassis bottoming occurs to send an alarm prompt when the difference values in the difference value set are all less than a third preset threshold.

According another aspect of the present application, a device for controlling vehicle chassis bottoming is provided.

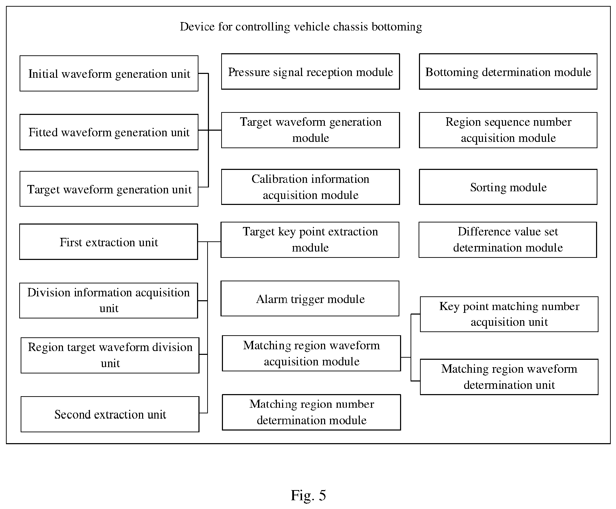

In a possible implementation, as shown in Fig. 5, the device includes:
a pressure signal reception module configured for receiving a pressure signal;
a target waveform generation module configured for generating a target waveform according to the pressure signal; a calibration information acquisition module configured for acquiring calibration information;
a target key point extraction module configured for extracting a preset number of target key points from the target waveform based on the calibration information; and
an alarm trigger module configured for determining that the vehicle chassis bottoming occurs to trigger alarm processing when a corresponding value of the target key point in the target waveform matches with the corresponding calibration information.

Further, the target waveform generation module further includes:
an initial waveform generation unit configured for generating a plurality of initial waveforms corresponding to a plurality of pressure signals when the pressure signals include the plurality of pressure signals;
a fitted waveform generation unit configured for fitting the plurality of initial waveforms to generate a fitted waveform; and
a target waveform generation unit configured for taking the fitted waveform as the target waveform. Further, the target key point extraction module includes:
a first extraction unit configured for extracting a preset number of target key points from the target waveform based on the calibration key points.

Further, the target key point extraction module further includes:
a division information acquisition unit for acquiring region division information about the plurality of calibration region waveforms when the calibration information includes region calibration information, the region calibration information includes a plurality of calibration region waveforms and region calibration key points corresponding to the plurality of calibration region waveforms;
a region target waveform division unit configured for performing region division on the target waveform according to the region division information to obtain a plurality of target region waveforms corresponding to the plurality of calibration region waveforms; and
a second extraction unit configured for extracting region target key points from the plurality of target region waveforms as the preset number of target key points based on the region calibration key points.

Further, the device further include:
a matching region waveform acquisition module configured for acquiring a matching region waveform matching with the calibration region waveform in the plurality of target region waveforms;
a matching region number determination module configured for determining the number of matching regions of the matching region waveform;
a matching determination module configured for determining that the corresponding value of the target key point in the target waveform matches with the calibration information when the number of matching regions is greater than a first preset threshold; and
a bottoming determination module configured for determining that the vehicle chassis bottoming occurs when the corresponding value of the target key point in the target waveform matches with the calibration information.

Further, the matching region waveform acquisition module includes:
a key point matching number acquisition unit configured for acquiring the number of matching region target key points in each target region waveform with the region calibration key points in the corresponding calibration region waveform; and
a matching region waveform determination unit configured for taking the target region waveform of which the number of values of the region target key points in the target region waveform matching with the values of the corresponding region calibration key points in the calibration region waveform is greater than a second preset threshold as a matching region waveform.

Further, the device further includes:
a region sequence number acquisition module configured for acquiring region sequence number information about the matching region waveform;
a sorting module configured for sorting the sequence number information;
a difference value set determination module configured for determining a difference value between adjacent sequence number information based on the sorting to obtain a difference value set; and
an alarm trigger module further configured for determining that the vehicle chassis bottoming occurs to trigger alarm processing when the difference values in the difference value set are all less than a third preset threshold.

According to another aspect of the present application, a computer-readable storage medium is provided. The storage medium has stored therein at least one instruction, at least one piece of program, a set of codes, or a set of instructions, which are loaded and executed by a processor to implement the above-described method for controlling vehicle chassis bottoming.

A computer-readable storage medium may be a tangible device that can hold and store instructions for use by an instruction execution device. The computer-readable storage medium may be, for example, but not limited to, an electrical storage device, a magnetic storage device, an optical storage device, an electromagnetic storage device, a semiconductor storage device, or any suitable combination of the preceding. More specific examples (a non-exhaustive list) of the computer-readable storage medium include a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disc (DVD), a memory stick, a floppy disk, a mechanical encoding device such as a punch card or a raised-in-groove structure having instructions stored thereon, and any suitable combination of the above. The computer-readable storage medium, as used herein, is not to be construed as an instantaneous signal itself, such as a radio wave or other freely-propagating electromagnetic wave, an electromagnetic wave propagating through a waveguide or other transmission medium (e.g., an optical pulse through a fiber optic cable), or an electrical signal transmitted through an electrical wire.

The computer-readable program instructions described herein may be downloaded from a computer-readable storage medium to various computing/processing devices, or to external computers or external storage devices over a network, such as the Internet, a local area network, a wide area network, and/or a wireless network. The network may include copper transmission cables, fiber optic transmissions, wireless transmissions, routers, firewalls, switches, gateway computers, and/or edge servers. A network adapter card or network interface in each computing/processing device receives computer-readable program instructions from the network and forwards the computer-readable program instructions for storage in a computer-readable storage medium in the respective computing/processing device.

The computer program instructions for carrying out operations of the present application may be assembler instructions, instruction set architecture (ISA) instructions, machine instructions, machine-related instructions, microcode, firmware instructions, state-setting data, or source or object code written in any combination of one or more programming languages, including object-oriented programming languages, such as Smalltalk, C ++ and the like, and conventional procedural programming languages, such as the "C" language or similar programming languages. The computer-readable program instructions may be executed entirely on the user's computer, partially on the user's computer, as a stand-alone software package, partially on the user's computer, partially on a remote computer, or entirely on the remote computer or server. In the case of a remote computer, the remote computer may be connected to the user's computer through any kind of network, including a LAN or a WAN, or may be connected to an external computer (e.g., through an Internet connection using an Internet Service Provider). In some embodiments, various aspects of the present application may be implemented by personalizing a custom electronic circuit, such as a programmable logic circuit, field programmable gate arrays (FPGA), or programmable logic arrays (PLA), with state information of computer-readable program instructions. The electronic circuit may execute computer readable program instructions to achieve all aspects of this application.

Various aspects of this application are described here with reference to flowcharts and/or block diagrams of the methods, devices (systems) and computer program products pursuant to this application embodiment. It will be understood that each block of the flowcharts and/or block diagrams, and combinations of blocks in the flowcharts and/or block diagrams, can be implemented by computer-readable program instructions.

These computer-readable program instructions may be provided to a processor of a general purpose computer, a special purpose computer, or other programmable data processing apparatus to produce a machine, such that the instructions, when executed by the processor of the computer or other programmable data processing apparatus, create means for implementing the functions/acts specified in the flowchart and/or block diagram block or blocks. These computer-readable program instructions may also be stored on a computer-readable storage medium, and may cause a computer, a programmable data processing apparatus, and/or other devices to function in a particular manner, such that a computer-readable medium having instructions stored thereon includes an article of manufacture including instructions that implement various aspects of the functions/acts specified in a block or blocks of the flowchart and/or block diagram.

The computer-readable program instructions may also be loaded onto a computer, other programmable data processing apparatus, or other device to cause a series of operational steps to be performed on the computer, other programmable data processing apparatus, or other device to produce a computer-implemented process, such that the instructions which are executed on the computer, other programmable data processing apparatus, or other device implement the functions/acts specified in a block or blocks of the flowchart and/or block diagram.

The flowcharts and block diagram in the drawings illustrate the architecture, functionality, and operation of possible implementations of systems, methods, and computer program products according to various embodiments of the present application. In this regard, each block in the flowchart or block diagram may represent a module, a program segment, or part of code, which includes one or more executable instructions for implementing the specified logical functions. In some alternative implementations, the functions noted in the blocks may occur differently than the order noted in the drawings. For example, two blocks in succession may, in fact, be executed substantially concurrently or they may sometimes be executed in the reverse order, depending upon the functionality involved. It is also noted that each block of the block diagrams and/or flowcharts, and combinations of blocks in the block diagrams and/or flowcharts, can be implemented by special purpose hardware-based systems which perform the specified functions or actions, or combinations of special purpose hardware and computer instructions.

According to the present application, a pressure signal is firstly received, then a target waveform is generated according to the pressure signal. Then calibration information is acquired, and a preset number of target key points in the target waveform is extracted based on the calibration information. When the target key point matches with the corresponding calibration information, it is determined that the vehicle chassis bottoming occurs to send an alarm prompt. By monitoring the state information of the chassis in real time, when it is determined in the present application that the vehicle chassis bottoming occurs, it sends an alarm prompt so as to enable the user to repair as soon as possible and improve the driving safety of the vehicle.

In the several embodiments provided herein, it should be understood that the disclosed equipment and method may be implemented in other ways. For example, the terminal embodiments described above are merely illustrative. For example, the partitioning of modules or units is merely a logical function partitioning, and actual implementations may have additional partitioning, e.g., multiple elements or components may be combined or integrated into another system, or some features may be omitted, or not performed. In another aspect, the couplings or direct couplings or communication connections shown or discussed with respect to each other may be indirect couplings or communication connections via some interfaces, modules, or units, and may be electrical, mechanical, or other forms.

## Claims

1. A computer implemented method for controlling vehicle chassis bottoming, comprising:
receiving a pressure signal;
generating a target waveform according to the pressure signal;
acquiring calibration information;
extracting a preset number of target key points from the target waveform based on the calibration information; and
determining that the vehicle chassis bottoming occurs to trigger alarm processing when a corresponding value of the target key point in the target waveform matches with the calibration information;
wherein the calibration information comprises region calibration information; the region calibration information comprises a plurality of calibration region waveforms and region calibration key points corresponding to the plurality of calibration region waveforms; and the extracting a preset number of target key points from the target waveform based on the calibration information comprises:
acquiring region division information about the plurality of calibration region waveforms;
performing region division on the target waveform according to the region division information to obtain a plurality of target region waveforms corresponding to the plurality of calibration region waveforms; and
extracting region target key points from the plurality of target region waveforms as the preset number of target key points based on the region calibration key points;
wherein before the step of determining that the vehicle chassis bottoming occurs when a corresponding value of the target key point in the target waveform matches with the calibration information, the method further comprises:
acquiring a matching region waveform matching with the calibration region waveform in the plurality of target region waveforms;
determining the number of matching regions of the matching region waveform;
determining that the corresponding value of the target key point in the target waveform matches with the calibration information when the number of matching regions is greater than a first preset threshold; and
determining that the vehicle chassis bottoming occurs when the corresponding value of the target key point in the target waveform matches with the calibration information; and **characterized in that**,
after determining the number of matching regions of the matching region waveform, the method further comprises:
acquiring region sequence number information about the matching region waveform;
sorting the sequence number information;
determining a difference value between adjacent sequence number information based on the sorting to obtain a difference value set; and
determining that the vehicle chassis bottoming occurs to trigger alarm processing when the difference values in the difference value set are all less than a third preset threshold.

2. The method for controlling vehicle chassis bottoming according to claim 1, **characterized in that**, when the pressure signal comprises a plurality of pressure signals, the generating a target waveform according to the pressure signal comprises:
generating a plurality of initial waveforms corresponding to the plurality of pressure signals;
fitting the plurality of initial waveforms to generate a fitted waveform; and
taking the fitted waveform as the target waveform.

3. The method for controlling vehicle chassis bottoming according to claim 1, **characterized in that** the calibration information includes calibration key points, and the extracting a preset number of target key points from the target waveform based on the calibration information comprises:
extracting a preset number of target key points from the target waveform based on the calibration key points.

4. The method for controlling vehicle chassis bottoming according to claim 1, **characterized in that** the acquiring a matching region waveform matching with the calibration region waveform in the plurality of target region waveforms comprises:
acquiring the number of matching region target key points in each target region waveform with the region calibration key points in the corresponding calibration region waveform; and
taking the target region waveform of which the number of values of the region target key points in the target region waveform matching with the values of the corresponding region calibration key points in the calibration region waveform is greater than a second preset threshold as a matching region waveform.

5. The method for controlling vehicle chassis bottoming according to claim 1, **characterized in that**, the determining that the vehicle chassis bottoming occurs when a corresponding value of the target key point in the target waveform matches with the calibration information comprises:
determining that bottoming of the vehicle chassis occurs when the corresponding absolute value of the target key point in the target waveform matches with a corresponding absolute value of the calibration key point in the calibration waveform.

6. A device for controlling vehicle chassis bottoming, comprising a processor and a transceiver , wherein the processor and the transceiver are connected to a memory, the memory is configured to store a computer program, and the processor is configured to execute the computer program stored in the memory, to enable the terminal device to perform the method according to any one of claims 1 to 5.

7. A computer-readable storage medium, **characterized in that** the storage medium has stored therein at least one instruction, at least one piece of program, a set of codes, or a set of instructions, which are loaded and executed by a processor to implement the method for controlling vehicle chassis bottoming according to any one of claims 1 to 5.

## Patentansprüche

1. Ein computerimplementiertes Verfahren zum Überwachen des Aufsetzens eines Fahrzeugchassis, das Folgendes beinhaltet:
Empfangen eines Drucksignals;
Erzeugen einer Zielwellenform gemäß dem Drucksignal;
Erfassen von Kalibrierungsinformationen;
Extrahieren einer voreingestellten Anzahl von Zielschlüsselpunkten aus der Zielwellenform auf der Basis der Kalibrierungsinformationen; und
Bestimmen, dass das Aufsetzen des Fahrzeugchassis auftritt, um eine Alarmverarbeitung auszulösen, wenn ein entsprechender Wert des Zielschlüsselpunkts in der Zielwellenform mit den Kalibrierungsinformationen übereinstimmt;
wobei die Kalibrierungsinformationen Bereichskalibrierungsinformationen beinhalten; die Bereichskalibrierungsinformationen eine Vielzahl von Kalibrierungsbereichswellenformen und der Vielzahl von Kalibrierungsbereichswellenformen entsprechende Bereichskalibrierungsschlüsselpunkte beinhalten; und das Extrahieren einer voreingestellten Anzahl von Zielschlüsselpunkten aus der Zielwellenform auf der Basis der Kalibrierungsinformationen Folgendes beinhaltet:
Erfassen von Bereichsaufteilungsinformationen über die Vielzahl von Kalibrierungsbereichswellenformen;
Durchführen einer Bereichsaufteilung an der Zielwellenform gemäß den Bereichsaufteilungsinformationen, um eine der Vielzahl von Kalibrierungsbereichswellenformen entsprechende Vielzahl von Zielbereichswellenformen zu erhalten; und
Extrahieren von Bereichszielschlüsselpunkten aus der Vielzahl von Zielbereichswellenformen als die voreingestellte Anzahl von Zielschlüsselpunkten auf der Basis der Bereichskalibrierungsschlüsselpunkte;
wobei das Verfahren vor dem Schritt des Bestimmens, dass das Aufsetzen des Fahrzeugchassis auftritt, wenn ein entsprechender Wert des Zielschlüsselpunkts in der Zielwellenform mit den Kalibrierungsinformationen übereinstimmt, ferner Folgendes beinhaltet:
Erfassen einer Übereinstimmungsbereichswellenform, die mit der Kalibrierungsbereichswellenform in der Vielzahl von Zielbereichswellenformen übereinstimmt;
Bestimmen der Anzahl von Übereinstimmungsbereichen der Übereinstimmungsbereichswellenform;
Bestimmen, dass der entsprechende Wert des Zielschlüsselpunkts in der Zielwellenform mit den Kalibrierungsinformationen übereinstimmt, wenn die Anzahl von Übereinstimmungsbereichen größer als ein erster voreingestellter Schwellenwert ist; und
Bestimmen, dass das Aufsetzen des Fahrzeugchassis auftritt, wenn der entsprechende Wert des Zielschlüsselpunkts in der Zielwellenform mit den Kalibrierungsinformationen übereinstimmt; und **dadurch gekennzeichnet, dass** das Verfahren nach dem Bestimmen der Anzahl von Übereinstimmungsbereichen der Übereinstimmungsbereichswellenform ferner Folgendes beinhaltet:
Erfassen von Bereichssequenznummerninformationen über die Übereinstimmungsbereichswellenform;
Sortieren der Sequenznummerninformationen;
Bestimmen eines Differenzwerts zwischen benachbarten Sequenznummerninformationen auf der Basis des Sortierens, um einen Differenzwertsatz zu erhalten; und
Bestimmen, dass das Aufsetzen des Fahrzeugchassis auftritt, um eine Alarmverarbeitung auszulösen, wenn die Differenzwerte in dem Differenzwertsatz alle kleiner als ein dritter voreingestellter Schwellenwert sind.

2. Verfahren zum Überwachen des Aufsetzens eines Fahrzeugchassis gemäß Anspruch 1, **dadurch gekennzeichnet, dass**, wenn das Drucksignal eine Vielzahl von Drucksignalen beinhaltet, das Erzeugen einer Zielwellenform gemäß dem Drucksignal Folgendes beinhaltet:
Erzeugen einer Vielzahl von Anfangswellenformen, die der Vielzahl von Drucksignalen entsprechen;
Anpassen der Vielzahl von Anfangswellenformen, um eine angepasste Wellenform zu erzeugen; und
Nehmen der angepassten Wellenform als die Zielwellenform.

3. Verfahren zum Überwachen des Aufsetzens eines Fahrzeugchassis gemäß Anspruch 1, **dadurch gekennzeichnet, dass** die Kalibrierungsinformationen Kalibrierungsschlüsselpunkte umfassen und das Extrahieren einer voreingestellten Anzahl von Zielschlüsselpunkten aus der Zielwellenform auf der Basis der Kalibrierungsinformationen Folgendes beinhaltet:
Extrahieren einer voreingestellten Anzahl von Zielschlüsselpunkten aus der Zielwellenform auf der Basis der Kalibrierungsschlüsselpunkte.

4. Verfahren zum Überwachen des Aufsetzens eines Fahrzeugchassis gemäß Anspruch 1, **dadurch gekennzeichnet, dass** das Erfassen einer
Übereinstimmungsbereichswellenform, die mit der Kalibrierungsbereichswellenform in der Vielzahl von Zielbereichswellenformen übereinstimmt, Folgendes beinhaltet:
Erfassen der Anzahl von Übereinstimmungsbereichszielschlüsselpunkten in jeder Zielbereichswellenform mit den Bereichskalibrierungsschlüsselpunkten in der entsprechenden Kalibrierungsbereichswellenform; und
Nehmen der Zielbereichswellenform, deren Anzahl von Werten der Bereichszielschlüsselpunkte in der Zielbereichswellenform, die mit den Werten der entsprechenden Bereichskalibrierungsschlüsselpunkte in der Kalibrierungsbereichswellenform übereinstimmen, größer als ein zweiter voreingestellter Schwellenwert ist, als eine Übereinstimmungsbereichswellenform.

5. Verfahren zum Überwachen des Aufsetzens eines Fahrzeugchassis gemäß Anspruch 1, **dadurch gekennzeichnet, dass** das Bestimmen, dass das Aufsetzen des Fahrzeugchassis auftritt, wenn ein entsprechender Wert des Zielschlüsselpunkts in der Zielwellenform mit den Kalibrierungsinformationen übereinstimmt, Folgendes beinhaltet: Bestimmen, dass das Aufsetzen des Fahrzeugchassis auftritt, wenn der entsprechende Absolutwert des Zielschlüsselpunkts in der Zielwellenform mit einem entsprechenden Absolutwert des Kalibrierungsschlüsselpunkts in der Kalibrierungswellenform übereinstimmt.

6. Eine Vorrichtung zum Überwachen des Aufsetzens eines Fahrzeugchassis, die einen Prozessor und einen Transceiver beinhaltet, wobei der Prozessor und der Transceiver mit einem Speicher verbunden sind, wobei der Speicher konfiguriert ist, um ein Computerprogramm zu speichern, und der Prozessor konfiguriert ist, um das in dem Speicher gespeicherte Computerprogramm auszuführen, um zu ermöglichen, dass die Endgerätvorrichtung das Verfahren gemäß einem der Ansprüche 1 bis 5 durchführt.

7. Ein computerlesbares Speichermedium, **dadurch gekennzeichnet, dass** in dem Speichermedium mindestens eine Anweisung, mindestens ein Programmteil, ein Satz Codes oder ein Satz Anweisungen gespeichert ist, die von einem Prozessor geladen und ausgeführt werden, um das Verfahren zum Überwachen des Aufsetzens eines Fahrzeugchassis gemäß einem der Ansprüche 1 bis 5 zu implementieren.

## Revendications

1. Un procédé mis en œuvre par ordinateur pour contrôler le talonnage d'un châssis de véhicule, comprenant :
le fait de recevoir un signal de pression ;
le fait de générer une forme d'onde cible en fonction du signal de pression ;
le fait d'acquérir des informations d'étalonnage ;
le fait d'extraire un nombre prédéfini de points clés cibles de la forme d'onde cible sur la base des informations d'étalonnage ; et
le fait de déterminer que le talonnage d'un châssis de véhicule se produit de sorte à déclencher un traitement d'alarme lorsqu'une valeur correspondante du point clé cible dans la forme d'onde cible concorde avec les informations d'étalonnage ;
dans lequel les informations d'étalonnage comprennent des informations d'étalonnage de région ; les informations d'étalonnage de région comprennent une pluralité de formes d'onde de région d'étalonnage et de points clés d'étalonnage de région correspondant à la pluralité de formes d'onde de région d'étalonnage ; et le fait d'extraire un nombre prédéfini de points clés cibles de la forme d'onde cible sur la base des informations d'étalonnage comprend :
le fait d'acquérir des informations de division de région concernant la pluralité de formes d'onde de région d'étalonnage ;
le fait de réaliser une division de région sur la forme d'onde cible en fonction des informations de division de région pour obtenir une pluralité de formes d'onde de région cibles correspondant à la pluralité de formes d'onde de région d'étalonnage ; et
le fait d'extraire des points clés cibles de région de la pluralité de formes d'onde de région cibles en tant que nombre prédéfini de points clés cibles sur la base des points clés d'étalonnage de région ;
dans lequel avant l'étape consistant à déterminer que le talonnage d'un châssis de véhicule se produit lorsqu'une valeur correspondante du point clé cible dans la forme d'onde cible concorde avec les informations d'étalonnage, le procédé comprend en outre :
le fait d'acquérir une forme d'onde de région concordante, qui concorde avec la forme d'onde de région d'étalonnage dans la pluralité de formes d'onde de région cibles ;
le fait de déterminer le nombre de régions concordantes de la forme d'onde de région concordante ;
le fait de déterminer que la valeur correspondante du point clé cible dans la forme d'onde cible concorde avec les informations d'étalonnage lorsque le nombre de régions concordantes est supérieur à un premier seuil prédéfini ; et
le fait de déterminer que le talonnage d'un châssis de véhicule se produit lorsque la valeur correspondante du point clé cible dans la forme d'onde cible concorde avec les informations d'étalonnage ; et **caractérisé en ce que**,
après le fait de déterminer le nombre de régions concordantes de la forme d'onde de région concordante, le procédé comprend en outre :
le fait d'acquérir des informations de numéro de séquence de région concernant la forme d'onde de région concordante ;
le fait de trier les informations de numéro de séquence ;
le fait de déterminer une valeur de différence entre des informations de numéro de séquence adjacent en prenant pour base le fait de trier pour obtenir un ensemble de valeurs de différence ; et
le fait de déterminer que le talonnage d'un châssis de véhicule se produit de sorte à déclencher un traitement d'alarme lorsque les valeurs de différence dans l'ensemble de valeurs de différence sont toutes inférieures à un troisième seuil prédéfini.

2. Le procédé pour contrôler le talonnage d'un châssis de véhicule selon la revendication 1, **caractérisé en ce que**, lorsque le signal de pression comprend une pluralité de signaux de pression, le fait de générer une forme d'onde cible en fonction du signal de pression comprend :
le fait de générer une pluralité de formes d'onde initiales correspondant à la pluralité de signaux de pression ;
le fait d'adapter la pluralité de formes d'onde initiales pour générer une forme d'onde adaptée ; et
le fait de prendre la forme d'onde adaptée en tant que forme d'onde cible.

3. Le procédé pour contrôler le talonnage d'un châssis de véhicule selon la revendication 1, **caractérisé en ce que** les informations d'étalonnage incluent des points clés d'étalonnage, et le fait d'extraire un nombre prédéfini de points clés cibles de la forme d'onde cible sur la base des informations d'étalonnage comprend :
le fait d'extraire un nombre prédéfini de points clés cibles de la forme d'onde cible sur la base des points clés d'étalonnage.

4. Le procédé pour contrôler le talonnage d'un châssis de véhicule selon la revendication 1, **caractérisé en ce que** le fait d'acquérir une forme d'onde de région concordante qui concorde avec la forme d'onde de région d'étalonnage dans la pluralité de formes d'onde de région cibles comprend :
le fait d'acquérir le nombre de points clés cibles de région concordante dans chaque forme d'onde de région cible avec les points clés d'étalonnage de région dans la forme d'onde de région d'étalonnage correspondante ; et
le fait de prendre la forme d'onde de région cible dont le nombre de valeurs des points clés cibles de région dans la forme d'onde de région cible concordant avec les valeurs des points clés d'étalonnage de région correspondante dans la forme d'onde de région d'étalonnage est supérieur à un deuxième seuil prédéfini en tant que forme d'onde de région concordante.

5. Le procédé pour contrôler le talonnage d'un châssis de véhicule selon la revendication 1, **caractérisé en ce que**, le fait de déterminer que le talonnage d'un châssis de véhicule se produit lorsqu'une valeur correspondante du point clé cible dans la forme d'onde cible concorde avec les informations d'étalonnage comprend :
le fait de déterminer que le talonnage d'un châssis de véhicule se produit lorsque la valeur absolue correspondante du point clé cible dans la forme d'onde cible concorde avec une valeur absolue correspondante du point clé d'étalonnage dans la forme d'onde d'étalonnage.

6. Un dispositif pour contrôler le talonnage d'un châssis de véhicule, comprenant un processeur et un émetteur-récepteur, dans lequel le processeur et l'émetteur-récepteur sont connectés à une mémoire, la mémoire est configurée pour stocker un programme informatique, et le processeur est configuré pour exécuter le programme informatique stocké dans la mémoire, pour permettre au dispositif terminal de réaliser le procédé selon l'une quelconque des revendications 1 à 5.

7. Un support de stockage lisible par ordinateur, **caractérisé en ce que** le support de stockage a stocké dans celui-ci au moins une instruction, au moins un élément de programme, un ensemble de codes, ou un ensemble d'instructions, qui sont chargés et exécutés par un processeur pour mettre en oeuvre le procédé pour contrôler le talonnage d'un châssis de véhicule selon l'une quelconque des revendications 1 à 5.
